# FASCICULE DE BREVET EUROPEEN

(11) **EP 2 556 435 B1**
(45) Date de publication et mention de la délivrance du brevet: **30.04.2014**
(21) Numéro de dépôt: 11720325.7
(22) Date de dépôt: 30.03.2011
(51) Int. Cl.: G06F 12/08

(54) **MÉMOIRE CACHE SEGMENTÉE**
SEGMENTIERTER ZWISCHENSPEICHER
SEGMENTED CACHE MEMORY

(30) Priorité: 09.04.2010 FR 1001494
(43) Date de publication de la demande: 13.02.2013
(73) Titulaire: Commissariat à l'Énergie Atomique et aux Énergies Alternatives, 75015 Paris (FR)
(72) Inventeur: DAVID, Vincent, F-91460 Marcoussis (FR); SIRDEY, Renaud, F-78720 Cernay La Ville (FR)
(74) Mandataire: de Jong, Jean Jacques
(86) Numéro de dépôt international: PCT/IB2011/051361
(87) Numéro de publication internationale: WO 2011/125001

(56) Documents cités:
- WO-A2-2004/079488
- Michelle TOMASKO, Simos HADJIYIANNIS, Walid A. NAJJAR (Department of Computer Science, Colorado State University): "Experimental Evaluation of Array Caches", IEEE Computer SocietyTechnical Committee on Computer Architecture (TCCA) Newsletter (Special Issue on Distributed Shared Memory and Related Issues, March 1997 ) , 1 mars 1997 (1997-03-01), XP002616458, Extrait de l'Internet: URL:http://tab.computer.org/tcca/news/mar9 7/tomasko.pdf [extrait le 2011-01-11] cité dans la demande

## Description

### Domaine technique de l'invention

L'invention est relative à la gestion de mémoires cache, notamment dans le cadre du traitement de flots de données en tant que réseau de processus concurrents.

### État de la technique

Dans un traitement de flot de données, une série de données de même nature, formant un flot entrant, subit une succession de traitements individuels, pour produire un flot de données sortant. Des exemples de traitements pouvant être exprimés en flots de données sont le filtrage d'une image, la compression / décompression de données (d'image, de son, d'une communication), le chiffrement / déchiffrement d'une communication, etc.

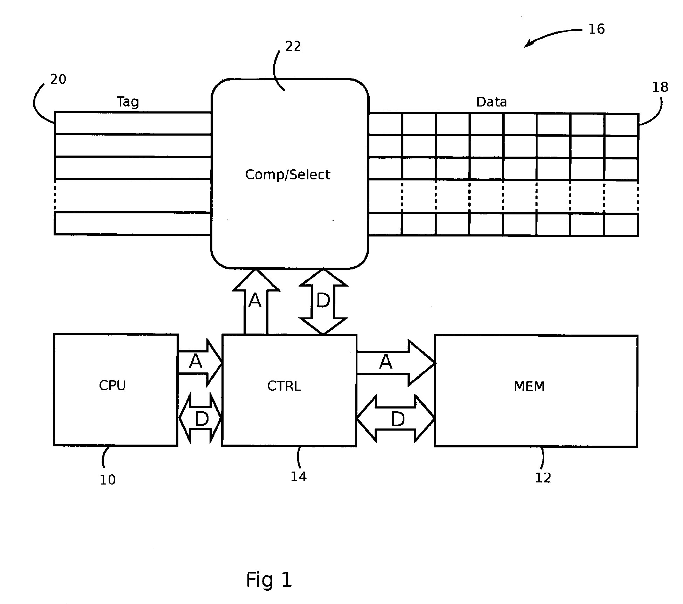

La figure 1 représente de manière schématique un système de traitement classique à mémoire cache, pouvant servir, entre autres, au traitement de flots de données. Un processeur (CPU) 10 communique avec une mémoire centrale 12 par un bus d'adresses A et un bus de données D. Ces bus de données et d'adresses sont interceptés par un circuit de gestion de mémoire cache 14 prévu, de manière générale, pour dévier les accès du processeur vers une mémoire cache 16.

La mémoire 12, généralement externe à la puce intégrant le processeur, est a accès lent par rapport aux possibilités du processeur. La mémoire cache 16 et son circuit de gestion 14, étant intégrés sur la même puce que le processeur, sont accessibles à la vitesse maximale du processeur. On cherche ainsi à ce que la mémoire cache contienne les données les plus fréquemment utilisées par le processeur.

Le rôle générique du circuit de gestion 14 est le suivant. A chaque fois que le processeur accède à une donnée dans la mémoire centrale 12, le circuit de gestion 14 intercepte l'accès et le dévie vers la mémoire cache 16. Si la donnée se trouve en mémoire cache, le processeur y accède directement (« cache hit » en anglais). Si la donnée est absente (« cache miss »), l'accès est renvoyé vers la mémoire centrale 12. Tandis que le processeur accède à la donnée manquée en mémoire centrale, le circuit de gestion 14 écrit la donnée manquée dans la mémoire cache. En fait, le circuit de gestion écrira en mémoire cache toute une ligne contenant la donnée manquée et les données consécutives suivantes de la mémoire centrale, partant de l'hypothèse que les données sont à localité spatiale, c'est-à-dire que le processeur travaille sur des données consécutives de la mémoire centrale.

Le circuit de gestion 14 se charge également de rafraîchir dans la mémoire centrale 12 les données qui ont été modifiées par le processeur dans la mémoire cache. Un tel rafraîchissement a généralement lieu lorsque la donnée modifiée en mémoire cache doit être évincée, c'est-à-dire remplacée par une nouvelle donnée du fait de l'épuisement d'emplacements libres dans la mémoire cache.

Comme cela est représenté à la figure 1, la mémoire cache 16 comprend un ensemble de lignes de données 18 (« Data ») dont chacune est apte à stocker une série de données consécutives, par exemple 8 mots de 64 bits. A chaque ligne 18 est associée une case d'index 20 (« Tag »). Un index stocké dans une case 20 est constitué des bits de poids fort communs aux adresses des données stockées dans la ligne 18 associée. Les bits de poids faible non inclus dans l'index servent à identifier la position de la donnée dans la ligne 18.

Un circuit de comparaison/sélection 22 a pour rôle de rendre accessibles au processeur les données présentes dans les lignes 18 en fonction des adresses A présentées par le circuit de gestion 14. Le circuit 22 compare les bits de poids fort de l'adresse A présentée par le circuit de gestion 14 aux index stockés dans les cases 20. En cas d'égalité avec l'un des index stockés, la ligne 18 correspondante est sélectionnée, et la donnée de la ligne à la position identifiée par les bits de poids faible de l'adresse A est rendue accessible au processeur par le bus de données D.

Le fonctionnement qui vient d'être décrit correspond à une mémoire cache entièrement associative, qui est pénalisante en coût matériel et en vitesse d'accès lorsque le nombre de lignes augmente. On préfère les mémoires cache associatives par ensembles. Dans ce cas, des bits de poids intermédiaire des adresses A servent à sélectionner un ensemble de lignes de cache et de cases d'index correspondantes parmi plusieurs ensembles.

Un problème récurrent dans la gestion des mémoires cache est d'assurer, avec la capacité de stockage relativement faible dont on dispose, qu'elles contiennent le plus souvent possible les données demandées par le processeur. En d'autres termes, on cherche à augmenter le taux de succès (« hit ratio ») des accès à la mémoire cache. Lorsque la mémoire cache est pleine, il faut décider de la ligne à évincer lors du prochain accès manqué. On utilise souvent la politique d'évincement de la ligne la plus anciennement utilisée (« Least Recently Used », ou LRU). Toutefois, quelle que soit la politique, on ne sait pas dans quelle mesure la ligne qu'on évince ne serait en fait pas utilisée plus souvent que la nouvelle ligne qu'on écrit.

Pour améliorer la situation, on a envisagé de découper la mémoire cache en plusieurs segments disjoints et de dédier chaque segment à des données classifiées selon des catégories spécifiques. Le rôle générique d'une segmentation de la mémoire cache est que des données d'une première catégorie ne viennent pas évincer des données d'une deuxième catégorie qui pourraient être utilisées aussi souvent que les données de la première catégorie. Reste le problème de la définition des catégories de données et du choix des tailles des segments.

L'article de M. Tomasko, S. Hadjiyiannis et W. A. Najar, "Experimental evaluation of array caches", IEEE TCCA Newsletter, 1999, propose de classifier les données selon qu'elles sont scalaires (données correspondant à des valeurs isolées) ou vectorielles (données sous forme de listes ou tableaux de valeurs).

Dans le cadre particulier du traitement de flots de données, l'article de A. Naz, K. M. Kavi, P. H. Sweany et M. Rezaei, "A study of separate array and scalar caches", Procedings of the 18th International Symposium on High Performance Computing Systems and Applications, 157-164, 2004, ainsi que l'article de K. M. Kavi, A. R. Hurson, P. Patadia, E. Abraham et P. Shanmugam, "Design of cache memories for multi-threaded dataflow architecture", ACM SIGARCH Computer Architecture News 23(2), 1995, proposent de classifier les données selon qu'elles sont scalaires ou indexées (tableau et mémoires tampon associés aux flots).

Egalement dans le cadre du traitement de flots de données, la demande de brevet US2007-0168615 propose de dédier un segment de mémoire cache à chaque flot de données traité en parallèle par un processeur.

### Résumé de l'invention

Parmi les solutions proposées de segmentation de mémoire cache, aucune ne s'avère vraiment optimale, notamment dans le cadre du traitement de flots de données. Il existe donc un besoin de prévoir une segmentation de mémoire cache particulièrement bien adaptée au traitement de flots de données.

On tend à satisfaire ce besoin en prévoyant une mémoire cache associée à une mémoire centrale et à un processeur susceptible d'exécuter une tâche de traitement de flots de données, comprenant plusieurs segments de stockage disjoints, chacun associé à une catégorie de données distincte. En cours de fonctionnement, un premier segment contient exclusivement des données d'entrée, ces données provenant d'un flot de données consommées par la tâche de traitement. Un deuxième segment contient exclusivement des données de sortie, ces données provenant d'un flot de données produites par la tâche de traitement. Un troisième segment contient exclusivement des constantes globales, correspondant à des données accessibles en un emplacement mémoire unique à plusieurs instances de la tâche de traitement.

Selon un mode de réalisation, le troisième segment comprend un sous-segment contenant exclusivement des constantes globales scalaires, et un sous-segment contenant exclusivement des constantes globales vectorielles.

Selon un mode de réalisation, la mémoire cache comprend, en cours de fonctionnement, un quatrième segment contenant exclusivement des variables locales scalaires, et un cinquième segment contenant exclusivement des variables locales vectorielles.

Selon un mode de réalisation, la mémoire cache comprend, en cours de fonctionnement, un sixième segment contenant exclusivement des données d'entrée/sortie, correspondant à un même tampon mémoire où une tâche de traitement lit ses données d'entrée et écrit ses données de sortie.

Selon un mode de réalisation, la mémoire cache est reliée au processeur et à la mémoire centrale par un bus d'adresses et un bus de données. Le bus d'adresses comprend des bits de poids faible définissant l'espace adressable de la mémoire centrale et des bits de poids fort aptes à sélectionner individuellement les segments de la mémoire cache.

Selon un mode de réalisation, les valeurs des bits de poids fort du bus d'adresses sont contenues dans le programme correspondant à la tâche de traitement.

On prévoit également un procédé de gestion d'une mémoire cache du type susmentionné, comprenant les étapes suivantes opérées lorsque le processeur accède à la mémoire centrale : identifier les données d'entrée, ces données provenant d'un flot de données consommées par la tâche de traitement, et les stocker dans un premier segment de la mémoire cache ; identifier les données de sortie, ces données provenant d'un flot de données produites par la tâche de traitement, et les stocker dans un deuxième segment distinct de la mémoire cache ; et identifier les constantes globales, correspondant à des données accessibles en un emplacement mémoire unique à plusieurs instances de la tâche de traitement, et les stocker dans un troisième segment distinct de la mémoire cache.

### Description sommaire des dessins

D'autres avantages et caractéristiques ressortiront plus clairement de la description qui va suivre de modes particuliers de réalisation donnés à titre d'exemples non limitatifs et illustrés à l'aide des dessins annexés, dans lesquels :
- la figure 1, précédemment décrite, représente schématiquement un système de traitement incorporant une mémoire cache ;
- la figure 2 représente schématiquement un système de traitement incorporant une mémoire cache segmentée ;
- la figure 3 représente une succession de tâches élémentaires dans un exemple de traitement de flot de données ;
- la figure 4 est un graphe comparant, pour l'exécution de l'une des tâches de la figure 3, les taux d'échec d'accès à la mémoire cache pour une mémoire cache non segmentée et une mémoire cache segmentée de manière optimisée ; et
- la figure 5 est un graphe comparant les taux d'échec pour l'exécution d'une tâche complexe comportant l'utilisation de nombreuses catégories de données dans le traitement d'un flot de données.

### Description d'un mode de réalisation préféré de l'invention

Des expérimentations effectuées par les inventeurs sur les traitements de flots de données, notamment à l'aide de calculateurs massivement muiti-coeurs, ont conduit les inventeurs à des choix spécifiques de segmentation de mémoire cache.

Par « segmentation » de mémoire cache, on n'entend pas seulement le choix d'affectation de chaque segment de la mémoire cache, mais également les éléments matériels ou logiciels gérant le stockage des données dans les segments qui leur sont attribués.

La segmentation a été étudiée en tenant compte du fait que différentes catégories de données intervenant dans un traitement de flot de données exhibent différents types de localité.

On distingue la localité spatiale, où des données adjacentes en mémoire sont consommées successivement par une tâche ; la localité temporelle, où des mêmes données sont réutilisées à plusieurs reprises dans le temps ; et la localité spatiotemporelle, où des données adjacentes en mémoire sont, à plusieurs reprises dans le temps, consommées successivement par une ou plusieurs tâches.

Par exemple, dans le cas d'une tâche à effet régulier sur ses canaux d'entrée et de sortie, il est vraisemblable que le programme de traitement mette en jeu l'ensemble des constantes associées à la tâche. Les constantes scalaires auront alors tendance à exhiber une localité temporelle et les constantes vectorielles (par exemple les coefficients d'un masque de convolution) auront tendance à exhiber une localité spatiale. De même, la localité temporelle des constantes est exacerbée lorsque le système arrive à exécuter la même tâche plusieurs fois de suite sur le même coeur, auquel cas on peut escompter, en sus d'une localité temporelle plus prononcée sur les constantes scalaires, une localité spatiotemporelle sur les constantes vectorielles. Les remarques ci-dessus s'appliquent de manière analogue aux données locales à la tâche.

Pour des raisons de détection et de confinement des erreurs, il est préférable de séparer les constantes et les variables locales dans des segments différents afin de tirer profit, à l'aide d'une fonction de protection de la mémoire, du caractère en lecture seule des constantes locales.

S'il est difficile de prévoir le type de localité que peuvent exhiber, ou pas, les données stockées en pile, le fait de doter la pile de son propre segment permet au moins d'isoler les autres catégories de données des effets de bord liés à une localité mal maîtrisée ou inexistante des données qui y résident.

Enfin, dans le contexte d'un traitement de flot de données, il est fort vraisemblable que les données d'entrée et de sortie de la tâche exhibent une localité spatiale prononcée et aucune localité temporelle (une fois consommées - respectivement produites - les données d'entrée - respectivement de sortie - n'étant généralement plus jamais utilisées).

On s'aperçoit qu'un tel mécanisme de segmentation contribue à diminuer significativement la variabilité des performances due à la mémoire cache par discrimination entre des catégories de données exhibant différents types de localité et par confinement des catégories de données exhibant une localité mal maîtrisée ou faible.

Partant de ces principes, une segmentation de base optimisée pour le traitement de flots de données comprend de préférence quatre segments affectés respectivement aux catégories de données suivantes :
1. Les données d'entrée, consommées par la tâche de traitement en cours d'exécution. Ces données sont généralement produites par une tâche précédente dans une chaîne de traitement, et stockées dans un tampon (FIFO) en mémoire centrale. La première tâche de la chaîne de traitement est généralement celle gérant une interface avec un périphérique d'entrée (une caméra, une connexion réseau, un périphérique de stockage...).
2. Les données de sortie, produites par la tâche de traitement en cours d'exécution. Ces données sont également stockées dans un tampon en mémoire centrale en attente d'être consommées par la tâche suivante dans la chaîne. La dernière tâche de la chaîne est généralement celle gérant une interface avec un périphérique de sortie (un dispositif d'affichage, une connexion réseau, un périphérique de stockage...).
3. Les constantes globales. Il s'agit de constantes définies de manière spécifique dans le programme associé à la chaîne de traitement. Par « globales », on entend que ces constantes sont définies de manière qu'elles sont accessibles à toute instance d'un sous-programme correspondant à la tâche de traitement en cours. En d'autres termes, si plusieurs instances de la même tâche sont en cours d'exécution en parallèle pour traiter des jeux différents de données, chacune de ces instances pourra utiliser les mêmes constantes globales.
4. Les données ne tombant dans aucune des trois catégories précédentes, notamment les variables et la pile.

On remarquera que les données de sortie d'une tâche constituent généralement les données d'entrée d'une autre tâche. Ces données, de sortie pour la première tâche, et d'entrée pour la deuxième tâche, sont affectées à deux segments de cache distincts (1 et 2) alors qu'elles sont stockées dans un même tampon mémoire physique. Ainsi, en théorie, deux segments de cache peuvent contenir les mêmes données, ce qui pourrait représenter un gaspillage de ressources. En pratique toutefois, le décalage entre l'instant où une tâche produit une donnée (écrite dans le segment 2), et l'instant où cette même donnée est consommée (écrite dans le segment 1) par la tâche suivante est tel que les données contenues dans les deux segments ne sont jamais dupliquées.

Les segments de la mémoire cache pourront être dimensionnés, à titre d'exemple, de la manière suivante (pour une mémoire cache de 100 lignes - pour d'autres dimensions, on pourra répartir les lignes proportionnellement) :

| Segment | 1 (données d'entrée) | 2 (données de sortie) | 3 (constantes globales) | 4 (autres) |
|---|---|---|---|---|
| Lignes | 10 | 18 | 46 | 26 |

On verra ci-après, à l'aide d'un exemple, le gain procuré par ce choix de segmentation.

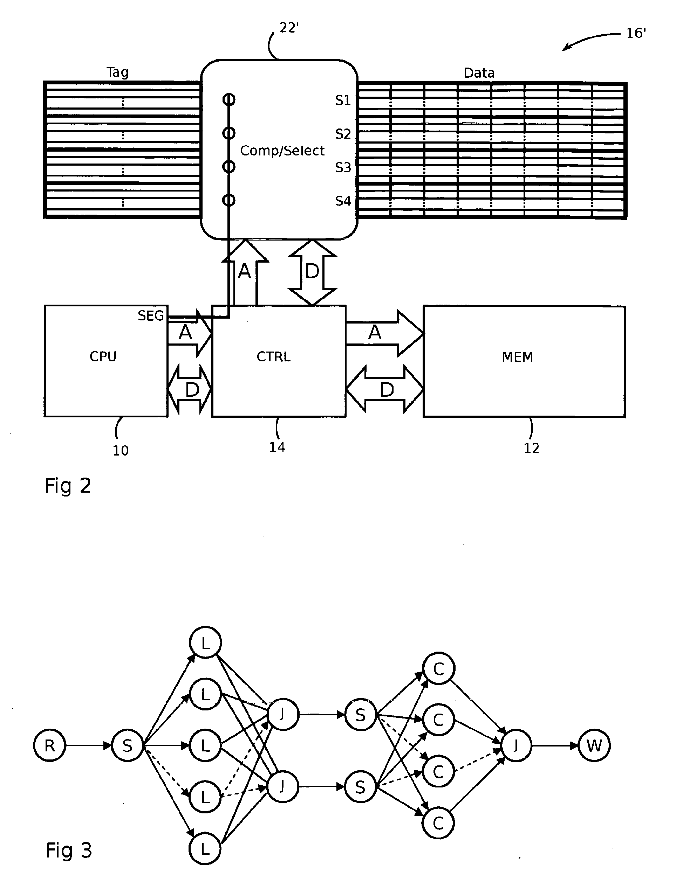

La figure 2 représente schématiquement un mode de réalisation de système de traitement incorporant une mémoire cache à quatre segments, apte à mettre en oeuvre le choix de segmentation susmentionné. On retrouve des mêmes éléments qu'à la figure 1, désignés par des mêmes références.

La mémoire cache et le circuit de comparaison/sélection ont ici été désignés respectivement par 16' et 22'. Ces éléments diffèrent de leurs homologues de la figure 1 par le fait qu'ils gèrent des lignes de cache réparties dans quatre segments disjoints S1 à S4.

Dans ce mode de réalisation, pour sélectionner un segment de cache à utiliser, on prévoit des bits de poids fort SEG en extension des adresses manipulées par le processeur 10, par exemple deux bits pour pouvoir sélectionner un segment parmi quatre. Ainsi, à chaque fois que le processeur 10 accède à une donnée en présentant son adresse sur le bus d'adresses A, il sélectionne en même temps le segment de cache associé à l'aide des bits étendus SEG du bus d'adresses.

Cette solution pour affecter les segments permet en outre d'affecter un même espace mémoire à plusieurs segments, dans le cas où les données de cet espace mémoire, vues par des tâches différentes, appartiennent à différentes catégories. C'est le cas notamment pour les segments 1 et 2, comme on l'a évoqué précédemment, lorsque les données de sortie d'une tâche constituent les données d'entrée d'une tâche suivante.

Généralement, le bus d'adresses A du processeur comporte des bits surnuméraires par rapport à l'espace mémoire effectivement utilisé. Ainsi, il n'est pas nécessaire d'agrandir le bus d'adresses du processeur - il suffit de prendre les bits SEG parmi les bits de poids fort surnuméraires. Les bits SEG n'auront aucune influence sur le comportement de la mémoire centrale 12 (ou une mémoire virtuelle, le cas échéant), qui ne répondra qu'aux bits de poids faible correspondant à la taille de son espace d'adressage.

L'affectation des bits SEG est de préférence effectuée au moment de l'édition de liens, après compilation du code source du programme mettant en oeuvre le traitement. L'éditeur de liens se charge, entre autres, de définir les plages d'adresses des données manipulées par le programme. L'éditeur de liens, sachant identifier les différentes catégories de données, pourra être prévu pour étendre les adresses allouées avec les bits de sélection SEG adéquats. Ces adresses étendues se trouvent alors incorporées dans le programme exécutable. Le processeur, en exécutant le programme, utilisera ces adresses étendues pour opérer la sélection des segments de manière transparente.

La figure 3 représente une succession de tâches élémentaires dans un exemple de traitement de flot de données. Il s'agit d'une détection de contours dans une image selon l'algorithme de Deriche. Le traitement est décomposé en une succession de tâches élémentaires distribuables sur plusieurs coeurs d'un système multi-processeurs, dont certaines peuvent avoir plusieurs instances exécutées en parallèle.

De gauche à droite, on commence par une tâche de lecture R des données de l'image, par exemple à partir d'un périphérique de stockage. Une tâche S sépare les lignes de l'image et alimente chaque ligne à une instance respective d'une tâche de traitement de ligne L. Chaque tâche L produit deux lignes ayant subi des traitements différents. Les deux lignes produites par chaque tâche L alimentent des instances respectives d'une tâche J qui les joint pour reconstituer une image intermédiaire. Les images intermédiaires produites par les tâches J sont alimentées à des instances respectives d'une tâche S qui sépare les colonnes des images. Chaque couple de colonnes produite par les deux tâches S est alimentée à une instance respective d'une tâche C de traitement de colonnes. Les colonnes traitées sont jointes par une tâche J pour reconstituer l'image traitée, qui est écrite sur un périphérique de stockage par une tâche W.

Afin d'évaluer le gain apporté par le choix de segmentation décrit plus haut, on s'intéresse ci-après à la tâche L, qui est la plus complexe du traitement. Cette tâche est mise en oeuvre par un sous-programme d'un programme qui met en oeuvre l'ensemble du traitement. En langage C, ce sous-programme peut s'écrire :

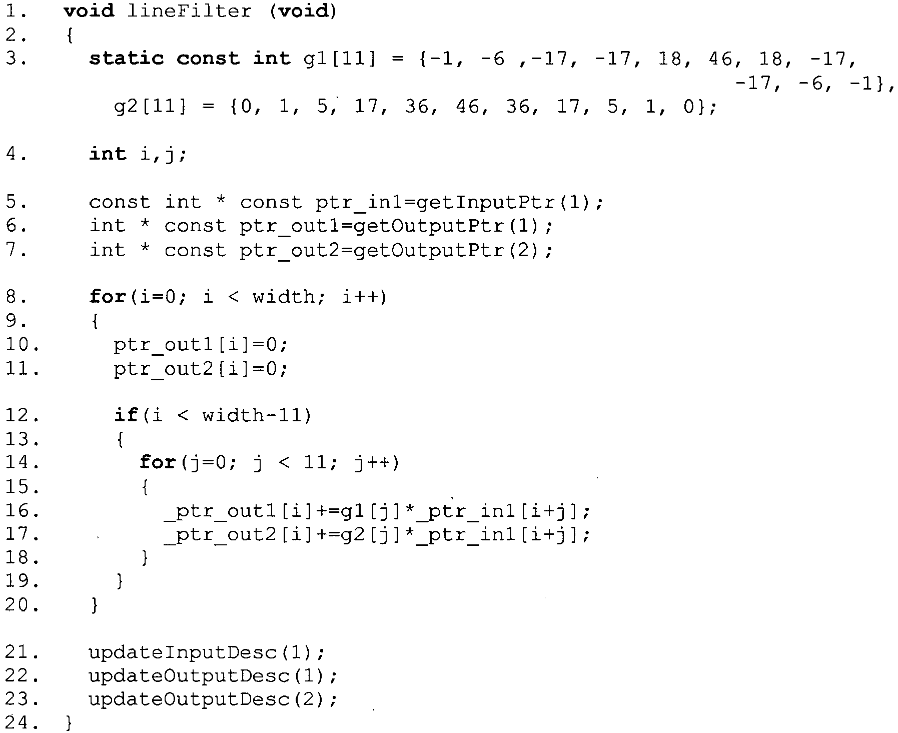

A la ligne 1, on déclare le sous-programme sous la forme d'une fonction ne prenant aucun paramètre et ne renvoyant aucun résultat.

A la ligne 3 on déclare deux tableaux unidimensionnels de constantes, g1 et g2, contenant chacun 11 coefficients de convolution. Chacun de ces tableaux est utilisé par la suite pour calculer chacune des deux lignes sortantes. En outre, la déclaration de ces constantes est qualifiée « static », ce qui signifie que ces constantes sont globales, dans le sens où elles sont disponibles dans un même emplacement mémoire à chaque instance de la fonction. Ainsi, ces constantes sont associées au segment 3 de la mémoire cache telle que définie plus haut.

A la ligne 4 on déclare deux indices de boucle i et j. Ces indices sont affectés au segment 4 de la mémoire cache.

A la ligne 5 on déclare un pointeur vers le tampon mémoire contenant les données d'entrée, à savoir les pixels de la ligne d'image à traiter. Le contenu identifié par ce pointeur est ainsi affecté au segment 1 de la mémoire cache. En fait, les pointeurs sont récupérés par un appel à une interface de programmation (API) ad hoc. Le pointeur résultant est appelé _ptr_in1 dans la suite de la fonction.

Aux lignes 6 et 7 on déclare deux pointeurs, appelés _ptr outl et _ptr_out2 dans la suite de la fonction, vers deux tampons mémoire destinés à contenir respectivement les deux lignes sortantes. Les contenus identifiés par ces deux pointeurs sont ainsi affectés au segment 2 de la mémoire cache. Ces deux pointeurs sont également initialisés par appels à une API.

On s'aperçoit que les pointeurs déclarés aux lignes 5 à 7 pointent vers un tampon existant (rempli par une tâche précédente) ou bien vers des tampons qui doivent être connus d'autres tâches (afin qu'elles y prélèvent leurs données d'entrée). Ces pointeurs pourraient être définis comme des variables globales dans la section « main » du code source du programme, d'où il résulterait que ces pointeurs seraient disponibles à toutes les fonctions du programme, sans qu'on ait besoin de les déclarer dans ces fonctions. Toutefois, cela n'est pas si simple si plusieurs instances d'une même fonction peuvent être exécutées en parallèle. En effet, chaque instance travaille avec des tampons différents. En utilisant une API on peut déléguer à l'édition des liens la gestion du positionnement des pointeurs de chaque instance, ce positionnement étant paramétrique.

De la ligne 8 à la ligne 20 on calcule chaque pixel des deux lignes sortantes comme une combinaison linéaire de 11 pixels successifs de la ligne entrante, les coefficients de la combinaison linéaire étant contenus dans les tableaux g1 (pour la première ligne sortante) et g2 (pour la deuxième ligne sortante).

Des lignes 21 à 23 on utilise une API permettant de procéder à la mise à jour des descripteurs de tampons, c'est-à-dire des structures de données d'accompagnement qui permettent, entre autres, de déterminer où, dans les tampons, se trouvent les données utilisées.

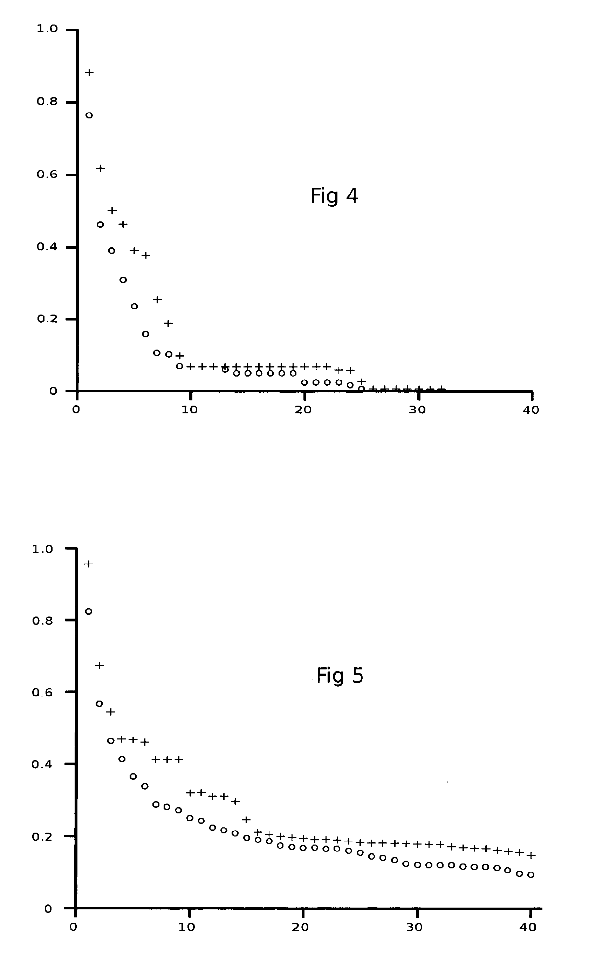

La figure 4 est un graphe illustrant, pour de multiples exécutions de la tâche L telle que définie ci-dessus, le gain moyen procuré par une mémoire cache segmentée selon le choix susmentionné. Le graphe représente le taux d'échec en fonction du nombre total de lignes de la mémoire cache. Le taux d'échec en utilisant une mémoire cache non segmentée est illustré par des « + », tandis que le taux d'échec en utilisant une mémoire cache segmentée est illustré par des « o ». La taille utilisée pour les lignes de mémoire cache est de 8 mots de 64 bits.

La tâche L étant relativement simple, et les essais ayant été effectués sans exécution de tâches en parallèle, le taux d'échec dans les deux cas tend vite vers 0 dès qu'on atteint 26 lignes. On remarquera toutefois que le taux d'échec avec la mémoire cache segmentée est toujours inférieur à celui obtenu avec une mémoire cache non segmentée. Les meilleurs résultats sont obtenus entre 20 et 24 lignes, où le taux d'échec avec une mémoire cache segmentée est à 40 % du taux obtenu avec une mémoire cache non segmentée. Dans le cas d'une mémoire cache très petite, de plus, il est possible de faire mieux que la politique optimale hors-ligne (qui aurait connaissance du futur) de gestion d'une mémoire cache non segmentée. Ceci n'est pas contradictoire mais découle du fait que, quelle que soit l'efficacité de cette politique, il est parfois bénéfique de ne pas mettre en cache certaines données.

On remarquera que le graphe commence par 1, 2 et 3 lignes alors qu'on a proposé une segmentation en quatre segments. Cela signifie que les tailles de certains segments sont choisies nulles dans ces cas particuliers. Les résultats reflètent le meilleur choix d'affectation des segments de taille non nulle. Les résultats restent meilleurs avec une mémoire cache segmentée. Cela indique qu'il vaut mieux réserver le peu de lignes cache dont on dispose à des données d'une certaine catégorie et de ne pas mettre en cache les données des autres catégories, plutôt que de mettre en cache toutes les données.

La figure 5 est un graphe comparant les taux d'échec pour l'exécution d'une tâche plus complexe et probablement plus représentative d'un environnement réel de traitement de flots. On a fait les essais en modifiant le code source de la fonction L en introduisant des « boîtes de substitution », typiquement utilisées dans les algorithmes de chiffrement symétrique. La fonction ne produit alors rien d'utile, mais son comportement est plus proche d'un traitement complexe d'un flot de données. Le code source de la tâche L, en langage C, est le suivant :

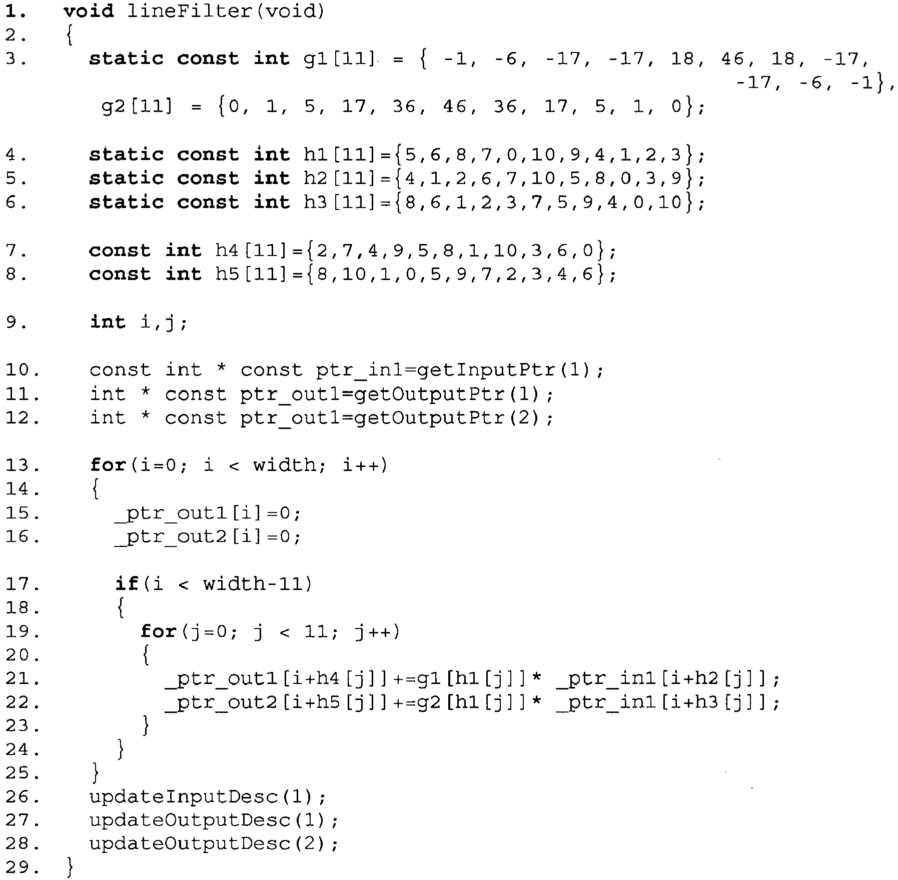

Par rapport au code source précédent, on a introduit trois nouveaux tableaux de constantes globales h1, h2 et h3, déclarés aux lignes 4 à 6. Ces tableaux sont affectés au segment 3 de la mémoire cache, comme les tableaux g1 et g2. On a également introduit deux tableaux de constantes locales h4 et h5 aux lignes 7 et 8. Ces tableaux sont affectés au segment 4 de la mémoire cache, comme les indices de boucle i et j. Les tableaux h4 et h5 auraient pu être des constantes globales comme les tableaux h1 à h3, mais on les a volontairement déclaré comme des constantes locales pour que le segment 4 soit plus utilisé.

Dans les calculs récursifs sur les pixels effectués entre les lignes 13 et 25, on brasse l'ordre des pixels d'entrée et de sortie et des constantes des tableaux g1 et g2 à l'aide des tableaux h1 à h5.

La figure 5 montre une évolution plus régulière des taux d'échec en fonction du nombre de lignes de cache. Ces taux d'échec, du fait que la tâche est plus disparate, sont supérieurs à ceux de la figure 4. Par contre on perçoit un gain systématique marqué lorsqu'on utilise une mémoire cache segmentée selon les choix décrits plus haut.

Dans un mode de réalisation plus évolué, offrant une optimisation supplémentaire, on prévoit huit segments de cache affectés aux catégories de données suivantes :
1. Les données d'entrée/sortie. Dans certains cas, les données produites par une tâche peuvent être écrites dans le même tampon mémoire que les données consommées par la tâche. En d'autres termes, au fur et à mesure que les données sont produites, elles viennent écraser les données consommées les plus anciennes, qui ne servent plus au calcul des données produites. Ainsi, un même tampon stocke à la fois des données d'entrée et des données de sortie.
2. Les données d'entrée, dans le cas où les données produites sont stockées dans un tampon distinct de celui des données d'entrée.
3. Les données de sortie, dans le cas où celles-ci sont stockées dans un tampon distinct de celui des données d'entrée.
4. Les constantes globales scalaires. Il s'agit de constantes contenant des valeurs individuelles, par exemple le nombre Pi, la constante d'Euler, ou toute autre constante intervenant de manière ponctuelle dans des calculs
5. Les constantes globales vectorielles. Il s'agit de listes ou de tableaux de valeurs, par exemple des coefficients de matrices.
6. Les données de la pile. La pile est une zone de stockage temporaire utilisée par le processeur pour stocker des résultats intermédiaires, par exemple des indices de boucle.
7. Les variables locales scalaires. Par « locales » on entend que ces variables ne sont pas accessibles à d'autres instances de la même tâche. Il s'agit, par exemple, de coefficients adaptatifs individuels qui sont mis à jour par itération en fonction du jeu de données particulier traité par la tâche.
8. Les variables locales vectorielles. Il s'agit, par exemple, de coefficients d'une matrice adaptative.

Les segments de la mémoire cache pourront être dimensionnés, à titre d'exemple, de la manière suivante :

| Segment | 1 | 2 | 3 | 4 | 5 | 6 | 7 | 8 |
|---|---|---|---|---|---|---|---|---|
| Lignes | 2 | 2 | 2 | 2 | 4 | 4 | 16 | 32 |

## Revendications

1. Mémoire cache (16') associée à une mémoire centrale (12) et à un processeur (10) susceptible d'exécuter une tâche de traitement de flots de données, comprenant plusieurs segments de stockage disjoints, chacun associé à une catégorie de données distincte, **caractérisée en ce qu'**elle comprend, en cours de fonctionnement :
• un premier segment contenant exclusivement des données d'entrée, ces données provenant d'un flot de données consommées par la tâche de traitement ;
• un deuxième segment contenant exclusivement des données de sortie, ces données provenant d'un flot de données produites par la tâche de traitement ; et
• un troisième segment contenant exclusivement des constantes globales, correspondant à des données accessibles en un emplacement mémoire unique à plusieurs instances de la tâche de traitement.

2. Mémoire cache selon la revendication 1, dans laquelle le troisième segment comprend :
• un sous-segment contenant exclusivement des constantes globales scalaires ; et
• un sous-segment distinct contenant exclusivement des constantes globales vectorielles.

3. Mémoire cache selon la revendication 1, comprenant, en cours de fonctionnement :
• un quatrième segment contenant exclusivement des variables locales scalaires ; et
• un cinquième segment contenant exclusivement des variables locales vectorielles.

4. Mémoire cache selon la revendication 1, comprenant, en cours de fonctionnement, un sixième segment contenant exclusivement des données d'entrée/sortie, correspondant à un même tampon mémoire où une tâche de traitement lit ses données d'entrée et écrit ses données de sortie.

5. Mémoire cache selon la revendication 1, reliée au processeur (10) et à la mémoire centrale (12) par un bus d'adresses (A) et un bus de données (D), le bus d'adresses comprenant des bits de poids faible définissant l'espace adressable de la mémoire centrale et des bits de poids fort (SEG) aptes à sélectionner individuellement les segments de la mémoire cache.

6. Mémoire cache selon la revendication 5, **caractérisée en ce que** les valeurs des bits de poids fort (SEG) du bus d'adresses (A) sont contenues dans le programme correspondant à la tâche de traitement.

7. Procédé de gestion d'une mémoire cache (16') associée à une mémoire centrale (12) et à un processeur (10) susceptible d'exécuter une tâche de traitement de flots de données, comprenant plusieurs segments de stockage disjoints, chacun associé à une catégorie de données distincte, **caractérisé en ce qu'**il comprend les étapes suivantes opérées lorsque le processeur accède à la mémoire centrale :
• identifier les données d'entrée, ces données provenant d'un flot de données consommées par la tâche de traitement, et les stocker dans un premier segment de la mémoire cache ;
• identifier les données de sortie, ces données provenant d'un flot de données produites par la tâche de traitement, et les stocker dans un deuxième segment distinct de la mémoire cache ; et
• identifier les constantes globales, correspondant à des données accessibles en un emplacement mémoire unique à plusieurs instances de la tâche de traitement, et les stocker dans un troisième segment distinct de la mémoire cache.

8. Procédé selon la revendication 7, **caractérisé en ce que** les catégories de données sont identifiées par l'intermédiaire de bits de poids fort (SEG) d'un bus d'adresses (A), ces bits de poids fort étant hors de l'espace d'adressage de la mémoire centrale (12).

9. Procédé selon la revendication 8, comprenant l'étape de définition des bits de poids fort (SEG) par une édition de liens effectuée après compilation du code source définissant la tâche de traitement.

## Patentansprüche

1. Zwischenspeicher (16'), der einem Zentralspeicher (12) und einem Prozessor (10) zugeordnet ist, der geeignet ist, eine Aufgabe zur Verarbeitung von Datenströmen auszuführen, umfassend mehrere getrennte Speichersegmente, die jeweils einer getrennten Datenkategorie zugeordnet sind, **dadurch gekennzeichnet, dass** er während des Betriebs umfasst:
- ein erstes Segment, das ausschließlich Eingangsdaten enthält, wobei diese Daten von einem Datenstrom kommen, der von der Verarbeitungsaufgabe konsumiert wird;
- ein zweites Segment, das ausschließlich Ausgangsdaten enthält, wobei diese Daten von einem Datenstrom kommen, der von der Verarbeitungsaufgabe produziert wird; und
- ein drittes Segment, das ausschließlich globale Konstanten enthält, entsprechend Daten, die an einem einzigen Speicherplatz zu mehreren Zeitpunkten der Verarbeitungsaufgabe zugänglich sind.

2. Zwischenspeicher nach Anspruch 1, bei dem das dritte Segment umfasst:
- ein Untersegment, das ausschließlich globale skalare Konstanten enthält; und
- ein getrenntes Untersegment, das ausschließlich globale vektorielle Konstanten enthält.

3. Zwischenspeicher nach Anspruch 1, während des Betriebs umfassend:
- ein viertes Segment, das ausschließlich lokale skalare Variablen enthält; und
- ein fünftes Segment, das ausschließlich lokale vektorielle Variablen enthält.

4. Zwischenspeicher nach Anspruch 1, umfassend während des Betriebs ein sechstes Segment, das ausschließlich Eingangs-/Ausgangsdaten entsprechend einem selben Pufferspeicher enthält, in dem eine Verarbeitungsaufgabe ihre Eingangsdaten abliest und ihre Ausgangsdaten aufschreibt.

5. Zwischenspeicher nach Anspruch 1, der mit dem Prozessor (10) und dem Zentralspeicher (12) durch einen Adressenbus (A) und einen Datenbus (D) verbunden ist, wobei der Adressenbus Bits von geringem Gewicht, die den adressierbaren Raum des Zentralspeichers definieren, und Bits von großem Gewicht (SEG) umfasst, die geeignet sind, die Segmente des Zwischenspeichers individuell auszuwählen.

6. Zwischenspeicher nach Anspruch 5, **dadurch gekennzeichnet, dass** die Werte der Bits mit großem Gewicht (SEG) des Adressenbusses (A) in dem Programm entsprechend der Verarbeitungsaufgabe enthalten sind.

7. Verfahren zur Verwaltung eines Zwischenspeichers (16'), der einem Zentralspeicher (12) und einem Prozessor (10) zugeordnet ist, der geeignet ist, eine Aufgabe zur Verarbeitung von Datenströmen auszuführen, umfassend mehrere getrennte Speichersegmente, die jeweils einer getrennten Datenkategorie zugeordnet sind, **dadurch gekennzeichnet, dass** es die folgenden Schritte umfasst, die durchgeführt werden, wenn der Prozessor auf den Zentralspeicher zugreift:
- Identifikation der Eingangsdaten, wobei diese Daten von einem Datenstrom stammen, der von der Verarbeitungsaufgabe konsumiert wird, und Speichern derselben in einem ersten Segment des Zwischenspeichers; und
- Identifikation der Ausgangsdaten, wobei diese Daten von einem Datenstrom stammen, der von der Verarbeitungsaufgabe erzeugt wird, und Speichern derselben in einem zweiten getrennten Segment des Zwischenspeichers; und
- Identifikation der globalen Konstanten, die Daten entsprechen, die an einem einzigen Speicherplatz zu mehreren Zeitpunkten der Verarbeitungsaufgabe zugänglich sind, und Speichern derselben in einem dritten getrennten Segment des Zwischenspeichers.

8. Verfahren nach Anspruch 7, **dadurch gekennzeichnet, dass** die Datenkategorien mit Hilfe von Bits mit großem Gewicht (SEG) eines Adressenbusses (A) identifiziert werden, wobei diese Bits mit großem Gewicht außerhalb des Adressierraums des Zentralspeichers (12) liegen.

9. Verfahren nach Anspruch 8, umfassend den Schritt der Definition der Bits mit großem Gewicht (SEG) durch eine Ausgabe von Links, die nach Kompilation des Quellencodes, der die Verarbeitungsaufgabe definiert, erfolgt.

## Claims

1. A cache memory (16') associated with a main memory (12) and a processor (10) capable of executing a dataflow processing task, the cache memory comprising a plurality of disjoint storage segments, each associated with a distinct data category, comprising, in operation:
• a first segment containing exclusively input data, the data originating from a dataflow consumed by the processing task;
• a second segment containing exclusively output data, the data originating from a dataflow produced by the processing task; and
• a third segment containing exclusively global constants, corresponding to data available in a single memory location to multiple instances of the processing task.

2. The cache memory according to claim 1, wherein the third segment comprises:
• a sub-segment containing exclusively global scalar constants, and
• a distinct sub-segment containing exclusively global vector constants.

3. The cache memory according to claim 1, comprising, in operation:
• a fourth segment containing exclusively local scalar variables, and
• a fifth segment containing exclusively local vector variables.

4. The cache memory according to claim 1, comprising, in operation, a sixth segment containing exclusively input/output data corresponding to a same memory buffer where a processing task reads its input data, and writes its output data.

5. The cache memory according to claim 1, connected to the processor (10) and to the main memory (12) by an address bus (A) and a data bus (D), the address bus having least significant bits defining the address space of the main memory and most significant bits (SEG) capable of selecting individual segments from the cache.

6. The cache memory according to claim 5, wherein the values of the most significant bits (SEG) of the address bus (A) are contained in an application program corresponding to the processing task.

7. Method for operating a cache memory (16') associated with a main memory (12) and a processor (10) capable of executing a dataflow processing task, comprising a plurality of disjoint storage segments, each associated with a distinct data category, comprising the following steps carried out when the processor accesses the main memory:
• identifying input data, the data originating from a dataflow consumed by the processing task, and storing them in a first segment of the cache memory;
• identifying output data, the data originating from a dataflow produced by the processing task, and storing them in a second, distinct, segment of the cache memory; and
• identifying global constants corresponding to data available in a single memory location to multiple instances of the processing task, and storing them in a third distinct segment of the cache memory.

8. The method according to claim 7, wherein the categories of data are identified by means of most significant bits (SEG) of an address bus (A), these most significant bits being out of the address space of the main memory (12).

9. The method of claim 8 including the step of defining the most significant bits (SEG) by a linking step performed after compiling the source code defining the processing task.
